Europäisches Patentamt

European Patent Office

Office européen des brevets

(11) Numéro de publication: **0 317 404**
**A1**

# DEMANDE DE BREVET EUROPEEN

(21) Numéro de dépôt: **88402833.3**

(22) Date de dépôt: **10.11.88**

(51) Int. Cl.⁴: **H 04 N 7/16**
**H 04 N 5/44**

(30) Priorité: **13.11.87 FR 8715733**

(43) Date de publication de la demande:
**24.05.89 Bulletin 89/21**

(84) Etats contractants désignés:
**AT BE CH DE ES FR GB GR IT LI LU NL SE**

(71) Demandeur: **OCEANIC S.A.**
**97 Avenue de Verdun**
**F-93230 Romainville (FR)**

(72) Inventeur: **Thevenin, Claude Gabriel Jean**
**80, rue F. Reclus**
**F-92000 Nanterre (FR)**

(74) Mandataire: **Moncheny, Michel et al**
**c/o Cabinet Lavoix 2 Place d'Estienne d'Orves**
**F-75441 Paris Cedex 09 (FR)**

(54) **Système de télévision à accès contrôlé.**

(57)  Ce système de télévision du type comportant un récepteur de télévision comprenant des moyens (3) de commande de sélection de programme et des moyens (4) de sélection de programme, est caractérisé en ce que des moyens (6) de contrôle d'accès à au moins certains programmes, sont interposés entre les moyens de commande de sélection (3) et les moyens de sélection (4). Ces moyens de contrôle peuvent comporter :
- des moyens d'autorisation d'accès aux programmes,
- des moyens de comptage du temps d'accès,
- des moyens d'interruption de l'accès au bout d'un temps déterminé.

FIG.1

Description

## Système de télévision à accès contrôlé

La présente invention concerne un système de télévision à usage contrôlé.

On connait déjà dans l'état de la technique, un certain nombre de systèmes de télévision à usage contrôlé, ces systèmes étant également appelés "systèmes de télévision à payage."

Ainsi par exemple, on connait déjà des systèmes de télévision qui comportent des moyens de codage des programmes de télévision à l'émission, et des moyens de décodage de ces programmes chez les utilisateurs, ceux-ci recevant une clé de décodage après paiement.

Par ailleurs, il existe également par exemple dans les hôpitaux ou les hôtels, des systèmes de télévision dans lesquels les récepteurs de télévision sont munis de moyens de mise en fonctionnement à pièces dans lesquels l'utilisateur doit introduire des pièces pour mettre la récepteur en fonctionnement et donc avoir accès aux différents programmes.

Cependant, tous ces dispositifs présentent un certain nombre d'inconvénients notamment au niveau de leur structure relativement complexe et de leur intégration difficile dans certains sites comme les hôtels ou les hôpitaux.

En effet, pour les systèmes de télévision à codage de programme, il est extrêmement difficile, voire impossible, de prévoir un décodeur dans chaque chambre d'hôtel ou d'hôpital, en raison des coûts que cela entraînerait.

Par ailleurs, pour les systèmes de télévision comportant des moyens de mise en fonctionnement à pièces, ils fonctionnent en tout ou rien et l'utilisateur ne peut donc avoir accès à aucun programme sans payer.

Le but de l'invention est donc de résoudre ces problèmes en proposant un système de télévision à usage contrôlé dont la stucture soit simple et d'un prix de revient peu élevé, mais qui permette de contrôler les accès aux programmes, programme par programme.

A cet effet, l'invention a pour objet un système de télévision à usage contrôlé, du type comportant un récepteur de télévision comprenant des moyens de commande d'accès à des programmes, caractérisé en ce que les moyens de commande d'accès comprennent des moyens de contrôle d'accès à au moins certains programmes.

Avantageusement, les moyens de commande d'accès à au moins certains programmes comprennent des moyens de commande de sélection de programme, et des moyens de sélection de programme, et les moyens de contrôle d'accès sont interposés entre les moyens de commande de sélection de programme et les moyens de sélection.

Les moyens de contrôle d'accès peuvent comprendre :
- des moyens d'autorisation d'accès,
- des moyens de comptage du temps d'accès,
- des moyens d'interruption de l'accès au bout d'un temps déterminé.

L'invention sera mieux comprise à l'aide de la description qui va suivre, donnée uniquement à titre d'exemple et faite en se référant aux dessins annexés, sur lesquels :
- la Fig.1 représente un schéma synoptique d'un premier mode de réalisation d'un système de télévision selon l'invention;
- la Fig.2 représente un schéma synoptique d'un second mode de réalisation d'un système de télévision selon l'invention;
- la Fig.3 représente un organigramme illustrant le fonctionnement du système de télévision représenté sur la Fig.1;
- la Fig.4 représente un organigramme illustrant le fonctionnement d'un système de télévision selon l'invention, dont la structure peut être analogue à celle représentée sur la Fig.2; et
- la Fig.5 représente des moyens de lecture/écriture et de facturation entrant dans la constitution d'un système de télévision selon l'invention.

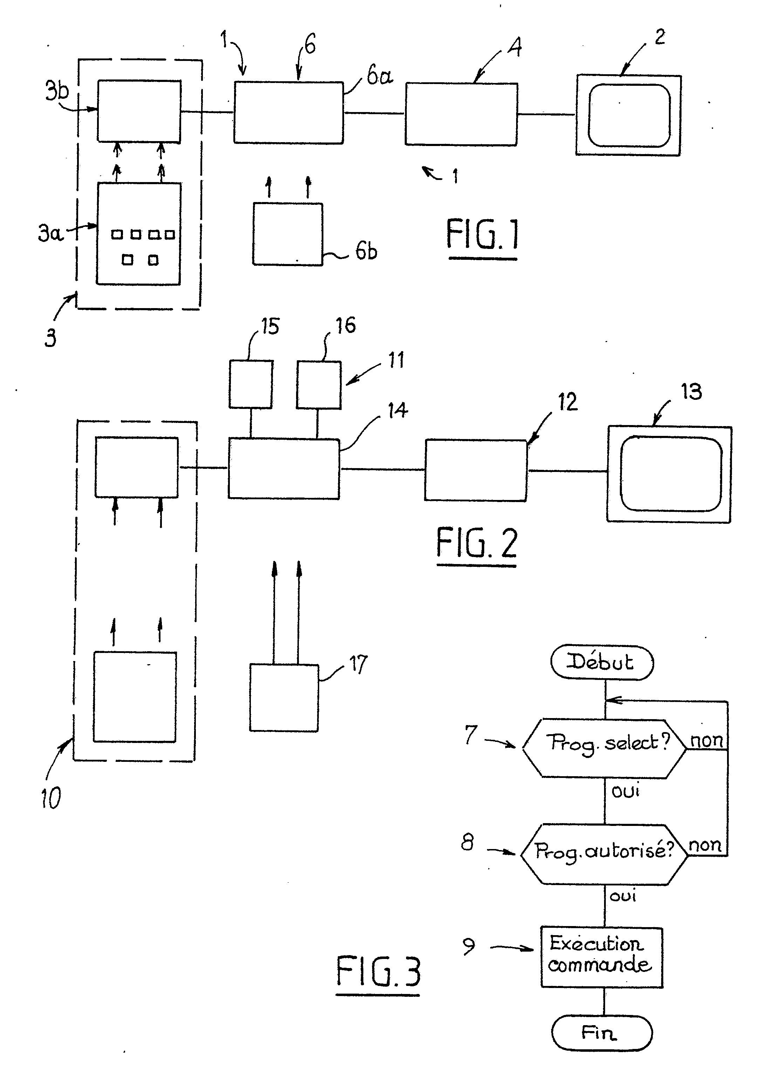

Ainsi qu'on peut le voir sur la Fig.1, un système de télévision à usage contrôlé selon l'invention, comporte un récepteur de télévision comprenant des moyens d'accès 1 à des programmes et un ensemble de visualisation 2.

Dans l'exemple de réalisation représenté sur cette Fig.1, les moyens de commande d'accès 1 comprennent des moyens de commande de sélection de programme 3 constitués par exemple par une télécommande à infrarouges comprenant un émetteur 3a et un récepteur 3b, et des moyens de sélection de programme 4 constitués par exemple par un synthétiseur de fréquence adapté pour effectuer, comme cela est connu en soi, une conversion des mots binaires provenant de la télécommande, en fréquence de commande de l'ensemble de visualisation 2.

Selon l'invention, des moyens 6 de contrôle d'accès à au moins certains programmes, sont interposés entre les moyens de commande de sélection 3 et les moyens de sélection 4, la fonction de ces moyens étant décrite plus en détail par la suite.

Ces moyens de contrôle d'accès à au moins certains programmes, peuvent être constitués par des moyens d'autorisation d'accès auxdits programmes. Ces moyens d'autorisation peuvent comprendre une unité centrale de traitement 6a à laquelle sont reliés des moyens de mémorisation 6b, dans lesquels sont stockées des informations déterminant des programmes accessibles. L'unité centrale de traitement 6a est adaptée pour comparer le programme sélectionné par l'intermédiaire des moyens de commande de sélection et les programmes autorisés, mémorisés dans les moyens de mémorisation 6b, et bloquer une commande de sélection de programme non autorisé.

Le fonctionnement d'un tel circuit est illustré sur la Fig.3, où l'on peut constater que l'unité centrale 6a effectue tout d'abord un test à l'étape 7 pour savoir si un programme a été sélectionné par l'intermédiaire des moyens de commande de sélection de programme et dans le cas d'une réponse OUI à ce test, l'unité centrale effectue un autre test à l'étape 8 pour déterminer si le programme sélectionné est un programme autorisé ou non avant d'autoriser, si la réponse à ce test est OUI, l'exécution de la commande en 9, par les moyens de sélection 4.

Le système de télévision tel qu'il vient d'être décrit peut se présenter sous deux formes différentes :

1) les moyens de mémorisation 6b sont reliés de manière permanente à l'unité centrale de traitement 6a.

L'utilisateur qui souhaite avoir accès à certains programmes, demande au personnel de la réception par exemple de l'hôtel, de venir programmer les moyens de mémorisation 6b pour avoir accès aux programmes souhaités. Le personnel de l'hôtel dispose alors de moyens d'écriture dans les moyens de mémorisation 6b, des programmes autorisés, ces moyens d'écriture comportant des moyens de connexion de type connu en soi, adaptés pour relier les moyens d'écriture aux moyens de mémorisation.

Une fois les programmes autorisés chargés dans les moyens de mémorisation, la facturation de l'autorisation d'accès aux programmes se fait par exemple en fonction de la durée du séjour de l'utilisateur dans l'hôtel.

2) les moyens de mémorisation 6b sont reliés de manière amovible à l'unité centrale de traitement 6a.

Dans ce cas, le récepteur de télévision de chaque chambre est doté d'un logement muni de moyens de connexion et adapté pour recevoir un module de moyens de mémorisation 6b séparé, et le relier à l'unité centrale de traitement 6a. L'utilisateur peut alors s'adresser à la réception par exemple de l'hôtel, pour obtenir un module de moyens de mémorisation 6b et indique au personnel de la réception quels sont les programmes auxquels il souhaite avoir accès.

Celui-ci introduit alors par l'intermédiaire de moyens d'écriture, dans les moyens de mémorisation 6b, les programmes autorisés, demandés par l'utilisateur de la chambre, et un numéro d'identification correspondant à un numéro d'identification affecté à l'unité centrale du récepteur de télévision de la chambre afin d'éviter toute fraude ou erreur. L'utilisateur n'a donc plus qu'à introduire dans le logement correspondant le module de moyens de mémorisation et l'unité centrale de traitement compare son propre numéro d'identification et le numéro d'identification du module de moyens de mémorisation afin de déterminer si oui ou non il y a fraude ou erreur.

Dans le cas où il y a fraude ou erreur, c'est à dire que les numéros d'identification ne correspondent pas, des moyens d'alarme, non représentés, peuvent être prévus pour indiquer à l'utilisateur de la chambre et au personnel de l'hôtel, la fraude ou l'erreur. Dans le cas contraire, l'unité centrale fonctionne de la manière décrite précédemment et compare les programmes sélectionnés et les programmes autorisés.

Sur la Fig.2, on a représenté un second mode de réalisation d'un système de télévision selon l'invention.

Ce système de télévision comprend toujours des moyens 10 de commande de sélection de programme reliés à travers des moyens 11 de contrôle d'accès à au moins certains programmes, à des moyens de sélection de programme 12 dont la sortie est reliée à un ensemble de visualisation 13.

Les moyens 11 de contrôle d'accès à au moins certains programmes comprennent une unité centrale de traitement 14 reliée à une base de temps 15 et à des moyens de mémorisation.

Deux modes de fonctionnement différents sont alors possibles :

I) les moyens de contrôle d'accès 11 aux programmes comprennent des moyens de comptage du temps d'accès aux programmes à accès contrôlé.

Deux modes de fonctionnement différents sont possibles :

a) dans le premier mode, l'unité centrale est reliée à deux modules de mémorisation 16 et 17 dont l'un, 16, est relié de manière permanente à l'unité centrale 14 et l'autre, 17, est relié de manière amovible à celle-ci et se présente sous la forme d'un module de mémoire adapté pour être engagé dans un logement de réception du récepteur de télévision et connecté par l'intermédiaire de moyens de connexion appropriés à l'unité centrale 14.

L'utilisateur s'adresse à la réception par exemple de l'hôtel pour obtenir un module de mémoire vierge. Une fois dans sa chambre, il enfiche le module de mémoire dans le logement correspondant et relie donc les moyens de mémorisation 17 à l'unité centrale, qui affecte à ce module de moyens de mémorisation 17, lors de son raccordement ou lors du premier appel à un programme à accès contrôlé, un numéro d'identification correspondant à son propre numéro d'identification. Lorsque l'utilisateur de la chambre regarde des programmes à accès contrôlé comme par exemple un programme de télévision interne à l'hôtel, l'unité centrale de traitement 14 compte le temps d'accès à ce programme à partir de la base de temps 15, et mémorise ce temps dans les moyens de mémorisation 16.

A l'interruption des programmes, l'unité centrale de traitement 14 effectue un transfert du temps passé à regarder le ou les programmes à accès contrôlé, des moyens de mémorisation 16 dans les moyens de mémorisation 17. L'utilisateur en quittant l'hôtel, déconnecte les moyens de mémorisation 17 en retirant le module de mémorisation puis s'adresse à la réception de l'hôtel, qui dispose de moyens de lecture du numéro d'identification et du temps passé à regarder des programmes à accès contrôlé, enregistrés dans ces moyens de mémorisation, et de moyens de facturation de ce temps passé, ces moyens de facturation étant constitués par exemple par un micro-ordinateur relié à une imprimante.

b) dans le second mode, le système de télévision ne comporte que des moyens de mémorisation 16 reliés de manière permanente à l'unité centrale de traitement. Dans ce cas, lorsque l'utilisateur a accès à certains programmes à accès contrôlé, l'unité centrale de traitement 14 compte le temps passé à regarder ces programmes à partir de la base de temps 15, et le mémorise dans les moyens de mémorisation 16. Lorsque l'utilisateur désire quitter l'hôtel, le personnel de l'hôtel qui dispose de moyens de lecture de ces moyens de mémorisation effectue un relevé du temps passé à regarder les programmes à accès contrôlé, ce relevé s'effectuant par un transfert du numéro d'identification affecté à l'unité centrale de traitement du récepteur de télévision correspondant et du temps passé à regarder les programmes à accès contrôlé, dans un micro-ordinateur de facturation.

II) Les moyens de contrôle d'accès 11 aux programmes comprennent des moyens d'interruption de l'accès au bout d'un temps déterminé.

Deux modes de réalisation sont possibles :
a) dans un premier mode de réalisation, la structure de ces moyens est identique à celle qui vient d'être décrite en Ia et ne sera pas reprise.

L'utilisateur qui souhaite avoir accès à certains programmes à accès contrôlé, s'adresse à la réception de l'hôtel qui dispose de moyens d'écriture dans un module de moyens de mémorisation 17, d'un numéro d'identification et d'un total de temps d'accès autorisé à des programmes à accès contrôlé. L'utilisateur de la chambre peut alors payer à l'avance un total de temps d'accès à certains programmes. Lorsque le module de moyen de mémorisation 17 est chargé, l'utilisateur peut l'introduire dans le récepteur de télévision de la chambre qu'il occupe et l'unité centrale de traitement 14 effectue, lors du raccordement du module de moyens de mémorisation ou lors du premier appel à un programme à accès contrôlé, une comparaison des numéros d'identification affectés à cette unité centrale et aux moyens de mémorisation 17 pour déterminer s'il y a fraude ou erreur.

Dans le cas où il n'y a pas fraude ou erreur, c'est à dire que les numéros d'identification correspondent, l'unité centrale de traitement effectue le transfert des informations concernant le temps d'accès de ces moyens de mémorisation 17 vers les moyens de mémorisation 16 soit lors du raccordement des moyens de mémorisation 17, soit lors du premier appel à un programme à accès contrôlé. Lorsque l'occupant accède à des programmes à accès contrôlé, l'unité centrale effectue la décrémentation du contenu des moyens de mémorisation 16 à partir de la base de temps 15 et assure l'interruption de l'accès aux programmes à accès contrôlé lorsque le contenu de ces moyens de mémorisation est égal à zéro.

b) dans ce second mode de réalisation, l'unité centrale de traitement 14 est uniquement reliée à des moyens de mémorisation 16 inamovibles. Dans ce cas, lorsque l'utilisateur désire accéder à des programmes à accès contrôlé, il s'adresse au personnel de l'hôtel qui dispose de moyens d'écriture dans les moyens de mémorisation 16 d'un quota de temps d'accès autorisé qui est facturé à l'utilisateur.

Lorsque l'utilisateur accède à des programmes à accès contrôlé, l'unité centrale de traitement 14 effectue la décrémentation du contenu des moyens de mémorisation 16 à partir de la base de temps 15.

Il va de soi que d'autres modes de fonctionnement sont possibles en combinant les différents fonctionnements le base décrits précédemment. Ainsi par exemple, les moyens de mémorisation peuvent comporter des informations d'autorisation d'accès à certains programmes comme décrit en référence à la Fig.1.

Par ailleurs, on a représenté sur la Fig.4, un organigramme illustrant le fonctionnement d'un système de télévision mettant en oeuvre les deux fonctionnements décrits en regard de la Fig.2.

En 18, l'unité centrale du système effectue tout d'abord un test pour déterminer si oui ou non, il y a une sélection de programme. S'il y a une sélection, l'unité centrale teste alors en 19 si le programme précédent regardé était gratuit et dans l'affirmative passe à l'étape 20 pour déterminer si le programme sélectionné est lui aussi gratuit ou non. Si oui, la commande est exécutée et l'opération de synthétisation a lieu en 21 et la visualisation en 22. Si la réponse au test 19 est négative, cela veut dire que l'utilisateur regardait un programme à accès contrôlé et l'unité centrale effectue alors en 23, une totalisation du temps d'accès au programme précédent et en 24, une mémorisation de ce temps, dans les moyens de mémorisation décrits précédemment.

A la suite de cette étape 24, on se retrouve à l'étape 20 dans laquelle l'unité centrale détermine si oui ou non le programme sélectionné est un programme gratuit.

En cas de réponse négative à ce test, cela veut dire que le programme sélectionné est un programme à accès contrôlé et l'unité centrale peut être programmée de manière à effectuer un test de validation en 25 qui consiste de la part de l'utilisateur à introduire un code de validation par l'intermédiaire par exemple des moyens de télécommande.

Dans le cas où cette validation n'est pas effectuée, l'unité centrale de traitement fait appel, en 26, au dernier programme gratuit regardé avant d'effectuer la synthétisation en 21 et la visualisation en 22.

Par contre, si la réponse au test de validation est OUI, l'unité centrale de traitement effectue en 27 un test pour déterminer le mode d'accès au programme.

Deux modes d'accès sont possibles.

1) Le mode dit "post-paiement", c'est à dire que les moyens de mémorisation stockent les temps d'accès aux programmes à accès contrôlé et le paiement s'effectue après lecture de ces moyens de mémorisation soit directement dans les moyens de mémorisation 16 du récepteur de télévision, soit dans les moyens de mémorisation 17 reliés de manière amovible au récepteur de télévision et que l'utilisateur adresse à la réception de l'hôtel, pour facturation.

2) Le mode dit " pré-paiement" est le mode de fonctionnement dans lequel l'utilisateur a demandé à la réception de l'hôtel de lui fournir un module de mémorisation dans lequel est stocké un quota de temps d'accès déterminé, ce temps d'accès ayant déjà fait l'objet d'une facturation.

La question posée en 27 est alors une détermination du mode d'accès en "post" ou en "pré-paiement" et cette question peut par exemple être un test pour savoir si le fonctionnement du système doit être en "post-paiement".

En cas de réponse négative à ce test, l'unité centrale détermine que le mode d'accès est en "pré-paiement" et teste alors les moyens de mémorisation en 28 pour déterminer si le quota de temps d'accès autorisé est terminé ou non. Si la réponse à ce test est oui, l'unité centrale fait alors appel au dernier programme gratuit sélectionné, en 26, avant la synthétisation et la visualisation en 21 et 22, respectivement.

Si la réponse au test en 28 est négative, c'est à dire que l'utilisateur dispose encore de temps d'accès à des programmes à accès contrôlé, l'opération de synthétisation de la nouvelle commande est effectuée.

Dans le cas où la réponse au test en 27 est OUI, c'est à dire que le mode de fonctionnement est en "post-paiement", l'unité centrale de traitement effectue en 29, un comptage du temps d'accès au programme et une mémorisation, en 30, de ce temps d'accès dans les moyens de mémorisation, afin de permettre au personnel de l'hôtel d'effectuer une facturation par la suite.

Cette facturation est par exemple réalisée par un dispositif tel que représenté sur la Fig.5, qui comporte des moyens 31 par exemple de lecture de moyens de mémorisation tels que les moyens de mémorisation 17 représentés sur la Fig.2, ces moyens 31 étant reliés par exemple par l'intermédiaire d'une ligne RS 232 à un micro-ordinateur 32, lui-même relié à une imprimante 33 pour effectuer les débits correspondants aux temps passés.

Ces moyens 31 peuvent également comprendre des moyens d'écriture des temps d'autorisation d'accès à des programmes à accès contrôlé, et des numéros d'identification dans les moyens de mémorisation, ces informations étant chargées par exemple par le personnel de la réception de l'hôtel dans le micro-ordinateur 32.

Cette lecture et cette écriture peuvent se faire programme par programme de manière à augmenter les possibilités d'adaptation du système.

L'unité centrale de traitement 14 peut par exemple être constituée par l'unité centrale de traitement du récepteur de télévision, tandis que les moyens de mémorisation peuvent être constitués par des mémoires programmables et effaçables électriquement (EEPROM).

Il va de soi que d'autres modes de réalisation et d'autres modes de fonctionnement sont possibles.

## Revendications

1. Système de télévision à usage contrôlé, du type comportant un récepteur de télévision (2;13) comprenant des moyens de commande d'accès (1) à des programmes, caractérisé en ce que les moyens de commande d'accès comprennent des moyens de contrôle (6; 11) d'accès à au moins certains programmes.

2. Système selon la revendication 1, dans lequel les moyens de commande d'accès comprennent des moyens de commande de sélection (3;10) de programme et des moyens de sélection (4;12) de programme, caractérisé en ce que les moyens de contrôle d'accès (6;11) sont interposés entre les moyens de commande de sélection (3;10) de programme et les moyens de sélection (4;12).

3. Système selon la revendication 1 ou 2, caractérisé en ce que les moyens de contrôle comprennent des moyens (6) d'autorisation d'accès auxdits programmes.

4. Système selon la revendication 3, caractérisé en ce que les moyens d'autorisation comprennent une unité centrale de traitement (6a) reliée à des moyens de mémorisation (6b) dans lesquels sont stockées des informations déterminant des programmes accessibles, l'unité centrale de traitement (6a) étant adaptée pour comparer les programmes sélectionnés et les programmes autorisés, mémorisés dans les moyens de mémorisation (6b), et bloquer une commande de sélection de programme non-autorisé.

5. Système selon la revendication 4, caractérisé en ce que les moyens de mémorisation comprennent une mémoire (6b) reliée de manière permanente à l'unité centrale de traitement (6a).

6. Système selon la revendication 4, caractérisé en ce que les moyens de mémorisation comprennant une mémoire (6b) reliée de manière amovible à l'unité centrale de traitement (6a).

7. Système selon l'une quelconque des revendications précédentes, caractérisé en ce que les moyens de contrôle d'accès aux programmes comprennent des moyens de comptage (11) du temps d'accès auxdits programmes.

8. Système selon la revendication 7, caractérisé en ce que les moyens de comptage comprennent une unité centrale de traitement (14) reliée à une base de temps (15) et à des moyens de mémorisation (16;17) du temps d'accès.

9. Système selon la revendication 8, caractérisé en ce que les moyens de mémorisation comprennent une mémoire (16) reliée de manière permanente à l'unité centrale de traitement (14).

10. Système selon la revendication 8, caractérisé en ce que les moyens de mémorisation comprennent une mémoire (17) reliée de manière amovible à l'unité centrale de traitement (14).

11. Système selon la revendication 8, caractérisé en ce que les moyens de mémorisation comportent une première mémoire (16) reliée de manière permanente à l'unité centrale de traitement (14) et une seconde mémoire (17) reliée de manière amovible à l'unité centrale de traitement, et en ce qu'il comporte des moyens (14) de transfert des informations concernant le temps d'accès aux programmes de la première à la seconde mémoire à l'interruption des programmes.

12. Système selon l'une quelconque des revendications 8 à 11, caractérisé en ce qu'un numéro d'identification est affecté à l'unité centrale de traitement (14).

13. Système selon la revendication 12, caractérisé en ce qu'il comporte des moyens d'écriture (14) du numéro d'identification dans la mémoire (17) reliée de manière amovible à l'unité centrale de traitement lors du raccordement de cette mémoire à l'unité centrale de traitement ou lors du premier appel à un programme à accès contrôlé.

14. Système selon l'une quelconque des revendications 8 à 13, caractérisé en ce qu'il comporte des moyens séparés (31) de lecture des moyens de mémorisation du temps d'accès et des moyens de facturation (32,33) du temps d'accès.

15. Système selon la revendication 14, caractérisé en ce que les moyens de facturation comprennent un micro-ordinateur (32) relié à une imprimante (33).

16. Système selon l'une quelconque des revendications 1 à 6, caractérisé en ce que les moyens de contrôle d'accès aux programmes comprennent des moyens d'interruption de l'accès au bout d'un temps déterminé.

17. Système selon la revendication 16, caractérisé en ce que les moyens d'interruption comprennent une unité centrale de traitement (14) reliée à une base de temps (15) et adaptée pour décrémenter le contenu de moyens de mémorisation (16,17).

18. Système selon la revendication 17, caractérisé en ce que les moyens de mémorisation comprennent une mémoire (16) reliée de manière permanente à l'unité centrale de traitement (14).

19. Système selon la revendication 17, caractérisé en ce que les moyens de mémorisation comprennent une mémoire (17) reliée de manière amovible à l'unité centrale de traitement (14).

20. Système selon la revendication 17, caractérisé en ce que les moyens de mémorisation comprennent une première mémoire (16) reliée de manière permanente à l'unité centrale de traitement (14) et une seconde mémoire (17) reliée de manière amovible à l'unité centrale de traitement (14) et en ce qu'il comporte des moyens de transfert (14) des informations concernant le temps d'accès autorisé aux programmes, de la seconde mémoire dans la première mémoire, lors du raccordement de la seconde mémoire (17) à l'unité centrale de traitement (14) ou lors du premier appel à un programme à accès contrôlé.

21. Système selon la revendication 20, caractérisé en ce que des numéros d'identification correspondants sont affectés à la seconde mémoire (17) et à l'unité centrale de traitement.

22. Système selon la revendication 18, caractérisé en ce qu'il comporte des moyens séparés (31) de chargement dans la mémoire (16) reliée de manière permanente à l'unité centrale de traitement, d'informations concernant le temps d'accès autorisé aux programmes.

23. Système selon la revendication 21, caractérisé en ce qu'il comporte des moyens séparés (31) de chargement dans la mémoire reliée de manière amovible à l'unité centrale de traitement (14), du numéro d'identification correspondant à l'unité centrale de traitement, et d'informations concernant le temps d'accès autorisé aux programmes.

24. Système selon la revendication 21 ou 23, caractérisé en ce qu'il comporte des moyens de comparaison (14) des numéros d'identification de l'unité centrale de traitement et des moyens de mémorisation (17) reliés de manière amovible à celle-ci et d'auto risation du transfert des informations concernant le temps d'accès autorisé aux programmes en cas de correspondance des numéros.

25. Système selon l'une quelconque des revendiations 4 à 24, caractérisé en ce que l'unité centrale de traitement (14) est l'unité centrale de traitement du récepteur de télévision.

26. Système selon l'une quelconque des revendications 4 à 24, caractérisé en ce que les moyens de mémorisation (16,17) comprennent des mémoires programmables et effaçables électriquement.

FIG.1

FIG.2

FIG.3

Début

7 → Prog. select?  non

oui

8 → Prog. autorisé?  non

oui

9 → Exécution commande

Fin

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 112 589 (PHILIPS) * Page 2, lignes 28-34; page 8, ligne 5 - page 11, ligne 5 * | 1-5 | H 04 N 7/16 H 04 N 5/44 |
| Y | | 6-9,16-18,22, 25,26 | |
| Y | EP-A-0 178 809 (WIEDEMER) * Page 9, ligne 15 - page 11, ligne 21; page 17, ligne 34 - page 21, ligne 35 * | 6,26 | |
| A | | 10-15, 19,21-24 | |
| Y | EP-A-0 180 460 (SONY) * Page 12, ligne 1 - page 13, ligne 9 * | 7-9,16, 18,22, 25 | |
| A | EP-A-0 153 837 (MATSUSHITA) * Page 4, ligne 12 - page 7, ligne 6 * | 11,20 | |
| A | EP-A-0 014 654 (TELEDIFFUSION DE FRANCE) | | **DOMAINES TECHNIQUES RECHERCHES (Int. Cl.4)** |
| A | FR-A-2 542 533 (THOMSON-BRANDT) | | H 04 N 7/00 H 04 N 5/00 |

Le présent rapport a été établi pour toutes les revendications

| Lieu de la recherche | Date d'achèvement de la recherche | Examinateur |
|---|---|---|
| LA HAYE | 23-12-1988 | DE ROECK A.F.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)